# EUROPÄISCHE PATENTANMELDUNG

(11) **EP 2 455 665 A2**
(43) Veröffentlichungstag der Anmeldung: **23.05.2012**
(21) Anmeldenummer: 11007235.2
(22) Anmeldetag: 06.09.2011
(51) Int. Cl.: F23R 3/06

(54) **Gasturbinenbrennkammer mit einer Kühlluftzuführvorrichtung**

(30) Priorität: 17.11.2010 DE 102010051638
(71) Anmelder: Rolls-Royce Deutschland Ltd & Co KG, 15827 Blankenfelde-Mahlow (DE)
(72) Erfinder: Gerendás, Miklós, Dr.-Ing., 15838 Am Mellensee (DE)
(74) Vertreter: Weber, Joachim

(57) **Zusammenfassung**

Die Erfindung bezieht sich auf eine Gasturbinenbrennkammer mit einer Kühlluftzuführvorrichtung zu einer zu kühlenden Brennkammerwand 6, wobei die Kühlluftzuführung zumindest einen Luftzuführkanal 8 umfasst, welcher mit seiner Strömungsachse senkrecht zu der Brennkammerwand 6 angeordnet ist, wobei der Luftzuführkanal 8 mit zumindest einem Kühlkanal 9 strömungsverbunden ist, wobei der Luftzuführkanal 8 eine Drossel bildet und einen geringeren Durchmesser aufweist, als der Kühlkanal 9, wobei der Kühlkanal 9 in einem flachen Winkel, bezogen auf seine Strömungsachse, zur Oberfläche der Brennkammerwand 6 in einer Ausnehmung 10 der Brennkammerwand 6 mündet, wobei der Kühlkanal 9 zur Ausbildung eines Dralls der ihn durchströmenden Luft ausgebildet ist.

## Beschreibung

Die Erfindung bezieht sich auf eine Gasturbinenbrennkammer mit einer Kühlluftzuführvorrichtung zu einer zu kühlenden Wand der Brennkammer.

Aus dem Stand der Technik sind unterschiedlichste Konstruktionen bekannt, um die durch sich verzweigende Ausnehmungen der Brennkammerwand zugeführte Luft in Form eines Films auf die Wandung aufzulegen. Die Zuführung der Kühlluft selbst wurde dabei nicht primär betrachtet.

Bei allen Konstruktion mit sich fortschreitend verkleinerndem Strömungsquerschnitt besteht inhärent eine Verstopfungsgefahr, da Flugtriebwerke ohne einen Luftfilter betrieben werden und somit in der Luft auch Sand und Staub durch das Triebwerk strömen kann. Die groben Sandkörner würden an der ersten Verzweigung stecken bleiben und die feinen Staubteilchen würden sich noch tiefer in der Wand an einer der nachfolgenden Verzweigungsstellen ansammeln.

Die Inspektion der Wand auf Verstopfung, welche sich nicht an der Oberfläche, sondern in der Wand selbst befindet, ist schwierig. Ebenso ein Problem ist die Reinigung, da an der heißgasseitigen Oberfläche nur sehr kleine Öffnungen sind und diese beim Spülen mit Luft, Wasser oder einem anderen Reinigungsmedium durch die vielen Umlenkungen nur eine geringe Kraft auf das den Kühlluftstrom blockierende Sandkorn im Kühlkanal ausüben können und damit die Reinigungswirkung begrenzt bleibt.

Wird hingegen an jeder Verzweigungsstelle der Querschnitt vergrößert oder bleibt zumindest gleich, so vermindert sich fortlaufend an jeder Verzweigungsstelle die Strömungsgeschwindigkeit und die Kühlwirkung nimmt mit jeder Verzweigungsstufe immer weiter ab.

Wird, wie in der EP 1 803 897 A2 vorgeschlagen, eine Helix als Kanalform verwendet, entsteht zwar eine verdrallte Strömung, welche trotz des großen Strömmungsquerschnitts zu einer guten Kühlwirkung im Kühlkanal führt, aber auch die Filmkühlwirkung auf der dem Heißgas zugewandten Seite des Bauteils ist ein wichtiger Bestandteil der Gasamtkühlkonzeptes für eine Brennkammerwand. Durch den in die Strömung eingebrachten Drall vermischt sich allerdings die Luft, welche aus einer Helix ohne weitere Maßnahmen auf die heißgaszugewandte Seite der Brennkammer oder Turbinenschaufel strömt, mit diesem Heißgas sehr schnell, und die Filmkühlwirkung bleibt gering.

Ebenso zu einer sehr geringen Kühlwirkung auf der Heißgasseite führt die Mündung eines Kühlkanal in einem im Wesentlichen senkrechten Winkel zur Oberfläche, da hierdurch die Kühlluft sich weit von dem Bauteil entfernt, und die Vermischung mit dem Heißgas durch die Erzeugung von Turbulenz gefördert wird.

Der Erfindung liegt die Aufgabe zugrunde, eine Kühlluftzuführvorrichtung für eine Gasturbinenbrennkammer zu schaffen, welche bei einfachem Aufbau und funktionssicherem Betrieb insbesondere die Gefahr von Verstopfungen durch Fremdpartikel vermeidet.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass die Kühlluftzuführvorrichtung zumindest einen Luftzuführkanal umfasst, welcher hinsichtlich seiner Mittelachse oder Strömungsachse senkrecht zu der Wand der Brennkammer bzw. zu einer Tangentenfläche im Bereich der Austrittsöffnung des Luftzuführkanals durch die Wand der Brennkammer angeordnet ist. Erfindungsgemäß wird unter dem Begriff "Strömungsachse" entweder die Mittelachse eines geraden, rohrförmigen Kanals verstanden, oder die dreidimensionale Mittellinie des Strömungskanals.

Erfindungsgemäß ist weiterhin vorgesehen, dass der Luftzuführkanal mit zumindest einem Kühlkanal strömungsverbunden ist und somit in diesen mündet. Dabei weist der Luftzuführkanal einen geringeren Durchmesser auf, als der zumindest eine nachfolgende Kühlkanal. Der Luftzuführkanal bildet somit eine Drossel oder Drosselstelle.

Weiterhin ist erfindungsgemäß vorgesehen, dass der Kühlkanal in einem flachen Winkel, bezogen auf seine Strömungsachse zur Oberfläche der Wand in einer Ausnehmung der Wand mündet. Die Strömung wird somit in einem flachen Winkel zu der Wand der Brennkammer geführt. Weiterhin ist erfindungsgemäß vorgesehen, dass der Kühlkanal zur Ausbildung eines Dralls der durchströmenden Luft ausgebildet ist.

In besonders günstiger Weiterbildung der Erfindung ist vorgesehen, dass der Drall entweder durch einen Achsversatz der Strömungsachsen des Luftzuführkanals und des Kühlkanals ausgebildet wird oder durch eine Helix-Form oder schraubenartige Ausgestaltung des Kühlkanal selbst.

In besonders günstiger Ausgestaltung der Erfindung ist vorgesehen, dass benachbart zueinander zwei Kühlkanäle angeordnet sind, welche in einem spitzen Winkel zueinander, bezogen auf ihre Strömungsachsen, angeordnet sind. Die durch die beiden Kühlkanäle zugeführten Strömungen verlaufen somit konvergent durch zwei zueinander benachbart angeordnete Ausnehmungen der Brennkammerwand, so wie dies im Nachfolgenden noch beschrieben werden wird. Die beiden benachbarten Kühlkanäle sind bevorzugterweise zur Ausbildung eines gegenläufigen Dralls des sie durchströmenden Luft ausgebildet. Dabei ist es besonders günstig, wenn die Drallrichtungen der beiden Luftströmungen so ausgebildet sind, dass die aus den Ausnehmungen der durch die Kühlkanäle zugeführten, ausströmenden Luftmengen sich an die Wand der Brennkammer anlegen.

Der flache Winkel der Mündung des Kühlkanals beträgt bevorzugterweise zwischen 5° und 45°, bevorzugt zwischen 10° und 30°. Ein Winkel von 20° ist besonders begünstigt. Der spitze Winkel zwischen den benachbarten Kühlkanälen ist erfindungsgemäß günstiger kleiner 45°.

In besonders günstiger Weiterbildung der Erfindung ist der Abstand der Ränder der Ausnehmungen der Wand, durch welche die Kühlkanäle münden, kleiner als vier Durchmesser der Öffnungen oder 2 * (Durchmesser der ersten Öffnung + Durchmesser der zweiten Öffnung).

Zur Verbesserung der Einströmung ist es besonders günstig, wenn die Winkelhalbierende im spitzen Winkel zwischen den beiden Kühlkanälen im Wesentlichen in Strömungsrichtung einer Strömung von Gasen entlang der zu kühlenden Wand der Brennkammer angeordnet ist.

Erfindungsgemäß wird somit die Luft durch einen engsten Querschnitt, welcher im Wesentlichen senkrecht zur Oberfläche in die Wand eintritt, so in einen etwas größeren Kühlkanal eingebracht, dass eine verdrallte Strömung entsteht, wobei der Drall durch einen Versatz der Achsen von engstem Querschnitt und weiterführendem Kanal entsteht, der weiterführende Kanal in einem flachen Winkel auf der dem Heißgas zugewandten Seite durch die Oberfläche des Bauteil mündet, immer zwei Öffnungen von weiterführenden Kanälen eng beieinander münden und hierbei durch ihre Achsen am Austritt einen spitzen Winkel einschließen, und der gegenläufige Drall zweier, eng beieinander liegender Austrittsöffnungen, sich so zueinander verhält, dass die Luft im Bereich zwischen den beiden Austrittsöffnungen in Richtung der zu kühlenden Wand strömt.

Ein flacher Winkel zur Oberfläche ist erfindungsgemäß bevorzugt ein Winkel zwischen 5° bis 45° Grad, besser 10° bis 30°, idealerweise 20°. Zwei Öffnungen sind eng beieinander liegend, wenn der Abstand der Ränder der Öffnungen kleiner als vier Durchmesser der Öffnungen oder 2 * (Durchmesser der ersten Öffnung + Durchmesser der zweiten Öffnung) ist. Ein spitzer Winkel zwischen den Achsen ist ein Winkel kleiner 45°.

Die Winkelhalbierende im spitzen Winkel zwischen den beiden eng beieinander mündenden Kühlkanälen wird im Wesentlichen an der Strömungsrichtung des Heißgases ausgerichtet.

Die eng beieinander liegen Öffnungen können vom gleichen engsten Querschnitt aus mit Luft versorgt werden oder von zwei benachbarten engsten Querschnitten. Der weitererführende Kanal kann ein oder zwei Ausgänge auf die dem Heißgas zugewandten Seite besitzen.

Strömt die Luft durch zwei engste Querschnitte weiter in zwei weiterführende Kanäle, wobei jeder Kanal nur jeweils einen Ausgang besitzt, und soll die Luft nach dem Austritt auf der heißgasseitigen Wand miteinander positiv wechselwirken, dann muss die Achse der beiden engsten Querschnitte auf der Außenseite der beiden im Wesentlichen V-förmig angeordneten weiterführenden Kanäle angeordnet sein, damit die aus den Kanälen ausströmende Luft zwischen den Kanälen in Richtung der zu kühlenden Wand strömt.

Strömt die Luft durch zwei im Wesentlichen Helix-förmige Kanäle, welche den Drall durch die Helix und nicht durch den Achsversatz des engsten Querschnitts erzeugen, dann muss die Drehrichtung der Heli der beiden eng beieinander auf der dem Heißgas zugewandten Seite mündenden Kanäle entgegengesetzt sein und so gerichtet, dass die aus den Kanälen ausströmende Luft zwischen den Kanälen in Richtung der zu kühlenden Wand strömt.

Sollen die Drallströmungen aus den zwei Ausgängen desselben weiterführenden Kanals miteinander wechselwirken, dann kann beispielsweise ein senkrecht zur Oberfläche stehender engster Querschnitt in einen in der Wand quer laufenden weiterführenden Kanal in der Art treffen, dass durch den Versatz der Achsen von engstem Querschnitt und weiterführendem Kanal eine Drallströmung entsteht, die Luft durch den querlaufenden weiterführenden Kanal in zwei Richtungen abfließen kann, und durch die gebogene Form des weiterführenden Kanals in zwei nahe beieinanderliegende Öffnungen auf der dem Heißgas zugewandten Seite des Bauteils durch die Oberfläche stoßen, wobei sich der Drall der beiden Luftströme dann in der Art zueinander verhält, dass die Luft zwischen den beiden Öffnungen in Richtung des zu kühlenden Bauteils strömt. Hierzu muss die Achse des engsten Querschnitts so gegenüber der Achse des querlaufenden Kanals verschoben sein, dass der engste Querschnitt in Richtung der Öffnung auf der Heißgasseite verschoben ist.

Sollen die Drallströmungen aus den zwei Ausgängen von benachbarten weiterführenden Kanälen miteinander wechselwirken, dann kann beispielsweise ein senkrecht zur Oberfläche stehender engster Querschnitt in einen in der Wand querlaufenden weiterführenden Kanal in der Art treffen, dass durch den Versatz der Achsen von engstem Querschnitt und weiterführendem Kanal eine Drallströmung entsteht, die Luft durch den querlaufenden weiterführenden Kanal in zwei Richtungen abfließen kann, und durch die Form des weiterführenden Kanals in zwei Öffnungen auf der dem Heißgas zugewandten Seite des Bauteils durch die Oberfläche stoßen, welche so angeordnet sind, dass nahe der eben beschriebenen Öffnung eine Öffnung, welche mit einem benachbarten engsten Querschnitt verbunden ist, zu liegen kommt, wobei sich der Drall der beiden Luftströme dann in der Art zueinander verhält, dass die Luft zwischen den beiden Öffnungen in Richtung des zu kühlenden Bauteils strömt. Hierzu muss die Achse des engsten Querschnitts so gegenüber der Achse des quer laufenden Kanals verschoben sein, dass der engste Querschnitt weg von der Öffnung auf der Heißgasseite verschoben ist.

Der erste Teil des Strömungskanals, welcher den engsten Querschnitt bildet, steht mit seiner Achse im Wesentlichen lokal senkrecht zur Oberfläche der Wand, die durch den Strömungskanal durchdrungen wird.

Der erste Teil des Strömungskanals, welcher den engsten Querschnitt bildet, liegt in einer Ebene mit einem Winkel zu der Ebene des zweiten Teils des Strömungskanals.

Die erfindungsgemäßen Kühlöffnungen werden nicht nachträglich in das Wandmaterial eingebracht, sei es eine Brennkammer oder ein anderes Bauteil einer Gasturbine, sondern werden zusammen mit der Wand erzeugt, die die Öffnung durchdringt. Dies kann zum Beispiel durch den lagenweisen Aufbau der Bauteils mittels Laserschweißen von Metallpulver geschehen oder durch Guss von Metall in eine mittels Lasersintern aus Keramikpulver hergestellte Gussform. Alternativ können auch mehrere Bleche entsprechend bearbeitet und dann aufeinander laminiert werden.

Die erfindungsgemäße Lösung bietet folgende Vorteile:

Durch die außen liegende Drosselstelle im engsten Querschnitt sind Verstopfungen von außen sichtbar. Durch den Drall in der Kühlöffnung wird der Wärmeübergang erhöht. Durch die Interaktion zweier benachbarter Kühlluftöffnungen mit zwei sich entgegengesetzt drehenden Wirbeln in der Art, dass sich die Luft zwischen den beiden Wirbeln in Richtung der zu kühlenden Wand bewegt, erhöht sich die Filmkühlwirkung. Somit werden beide Aspekte eines Kühlungskonzeptes verbessert.

Im Folgenden wird die Erfindung anhand von Ausführungsbeispielen in Verbindung mit der Zeichnung beschrieben. Dabei zeigt:
- Fig. 1: eine schematische Schnittansicht einer Gasturbinenbrennkammer,
- Fig. 2: eine perspektivische Teil-Darstellung eines Ausführungsbeispiels mit gegenläufigem Drall aus benachbarten Kühlkanälen,
- Fig. 3A,B: perspektivische Teil-Darstellungen mit gegenläufigem Drall aus beiden Enden einer Kühlkanalanordnung eines weiteren Ausführungsbeispiels,
- Fig. 4: eine perspektivische Teil-Darstellung eines weiteren Ausführungsbeispiels mit gegenläufigem Drall aus zwei gegenläufigen Helix-förmigen Kühlkanälen,
- Fig. 5: eine perspektivische Teil-Darstellung eines weiteren Ausführungsbeispiels mit Drall in einer zylindrischen Effusionsöffnung,
- Fig. 6: eine perspektivische Teilansicht eines weiteren Ausführungsbeispiels mit einem parallel in der Wand verlaufenden Kühlkanal, und
- Fig.7: eine vereinfachte Prinzip-Darstellung der Wechselwirkung der Drallströmungen benachbarter Kühlkanäle.

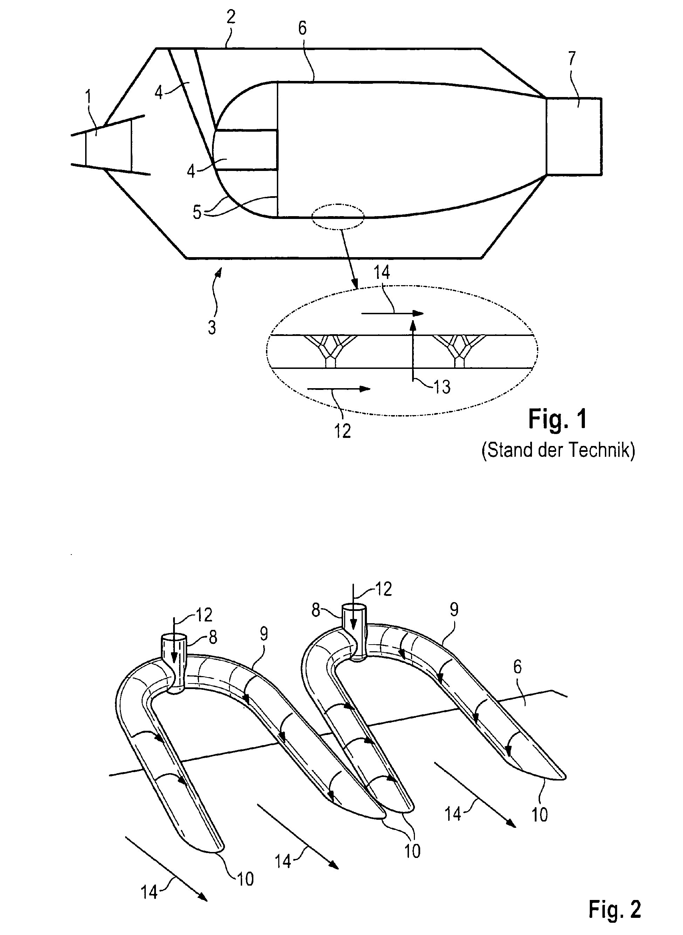

Die Fig. 1 zeigt in schematischer Darstellung einen Querschnitt einer Gasturbinenbrennkammer gemäß dem Stand der Technik. Dabei sind schematisch Kompressorauslaufschaufeln 1 sowie ein Brennkammeraußengehäuse 2 und ein Brennkammerinnengehäuse 3 dargestellt. Das Bezugszeichen 4 bezeichnet einen Brenner mit Arm und Kopf, das Bezugszeichen 5 bezeichnet einen Brennkammerkopf, an welchem sich eine Brennkammerwand 6 anschließt, durch welche die Strömung zu Turbineneinlassschaufeln 7 geleitet wird. Im vergrößerten Detail sind links ein sich verjüngender Querschnitt (GB 2 412 411 A) mit konstanter Geschwindigkeit und rechts ein konstanter Querschnitt (EP 1 803 897 A2) mit sich vermindernder Geschwindigkeit dargestellt.

Bei den nachfolgend beschriebenen Ausführungsbeispielen werden gleiche Teile mit gleichen Bezugsziffern versehen.

Bei allen Ausführungsbeispielen strömt die zugeführte Kühlluft zunächst durch einen Luftzuführkanal 8, welcher senkrecht zu der Brennkammerwand 6 angeordnet ist, so wie sich dies aus dem in den Figuren dargestellten Strömungspfeil jeweils ergibt. Der jeweilige Luftzuführkanal 8 ist mit einem kleineren Querschnitt versehen, als ein sich an diesen anschließender Kühlkanal. Somit bildet der Luftzuführkanal 8 eine Drosselstelle für die weiterströmende Luft in den zumindest einen Kühlkanal 9.

Die Kühlkanäle 9 und der Luftzuführkanal 8 sind jeweils so ausgebildet, dass sich ein Drall der Luftströmung ergibt, so wie dies durch die Pfeile in den Figuren dargestellt ist.

Aus den Figuren ist weiterhin die Brennkammerwand 6 der Brennkammer zu ersehen sowie die längs der Wand verlaufende Heißgasluftströmung. Es ergibt sich, dass die Kühlkanäle 9 jeweils in einem flachen Winkel zur Brennkammerwand 6 angeordnet sind. Weiterhin sind benachbarte Kühlkanäle 9 in einem spitzen Winkel zueinander angeordnet, so dass sich die austretenden gedrallten Luftströmungen jeweils konvergent treffen. Die Drallrichtung ist dabei so gewählt, dass sich, wie beispielsweise in Fig. 9 gezeigt, die Luftströmung gegen die Brennkammerwand 6 anlegt.

Die Fig. 2 zeigt ein Ausführungsbeispiel mit gegenläufigem Drall aus zwei benachbarten engsten Querschnitten (Luftzuführkanäle 8) mit stromab verschobener Achse des engsten Querschnitts gegenüber dem querlaufenden Kanal (Kühlkanal 9) in der Brennkammerwand 6. Es ergibt sich, dass die Darstellungen der Fig. 2 bis 6 jeweils schematische perspektivische Darstellungen sind. Dargestellt ist somit die innere Oberfläche des Luftzuführkanals 8 bzw. des Kühlkanals 9 bzw. die Luft im Kühlkanal 9. Das Äußere der Brennkammerwand 6 wurde auf der dem Heißgas abgewandten Seite entfernt. Es ergibt somit, dass zwei im Wesentlichen U-förmige Kühlkanäle 9 vorgesehen sind.

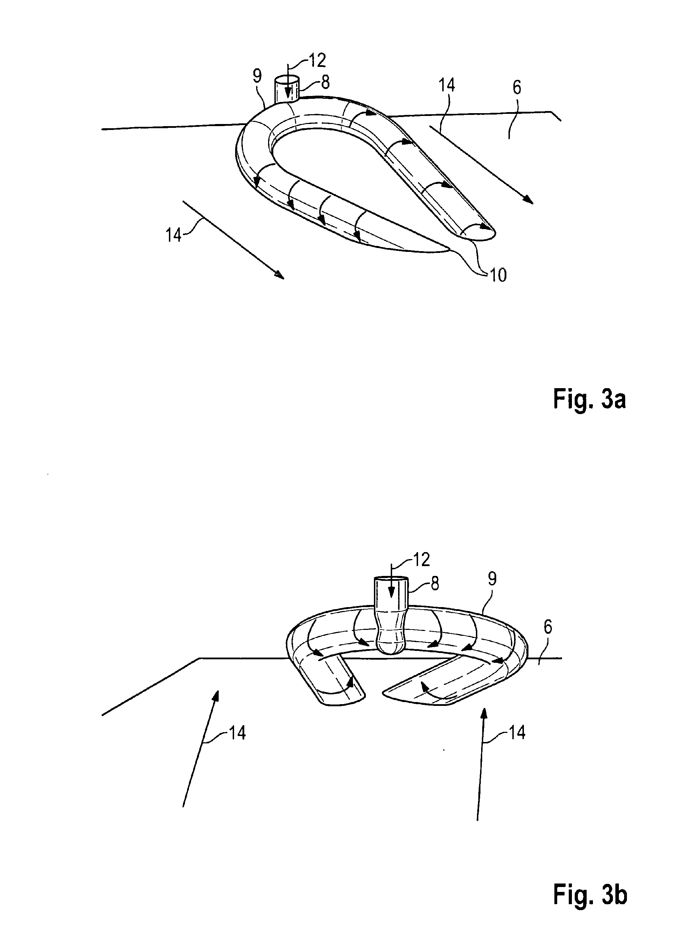

Bei dem Ausführungsbeispiel der Fig. 3A und 3B sind die beiden Enden des doppelten U-förmigen Kühlkanals einander im spitzen Winkel zugewandt. Es ergibt sich ein gegenläufiger Drall aus beiden Enden der Kühlkanäle 9, versorgt durch denselben engsten Querschnitt (Luftzuführkanal 8) mit stromauf verschobener Achse des engsten Querschnitts (Luftzuführkanal 8) gegenüber dem quer laufenden Bereich des Kühlkanals 9 in der Wand (Ansicht von stromab).

Die Fig. 3B zeigt den gegenläufigen Drall aus beiden Enden des Kühlkanals 9, versorgt durch denselben engsten Querschnitt des Kühlkanals 8 mit stromauf verschobener Achse des Luftzuführkanals 8 engsten Querschnitts gegenüber dem querlaufenden Bereich Kanal der Kühlkanäle 9 in der Wand (Ansicht von stromauf).

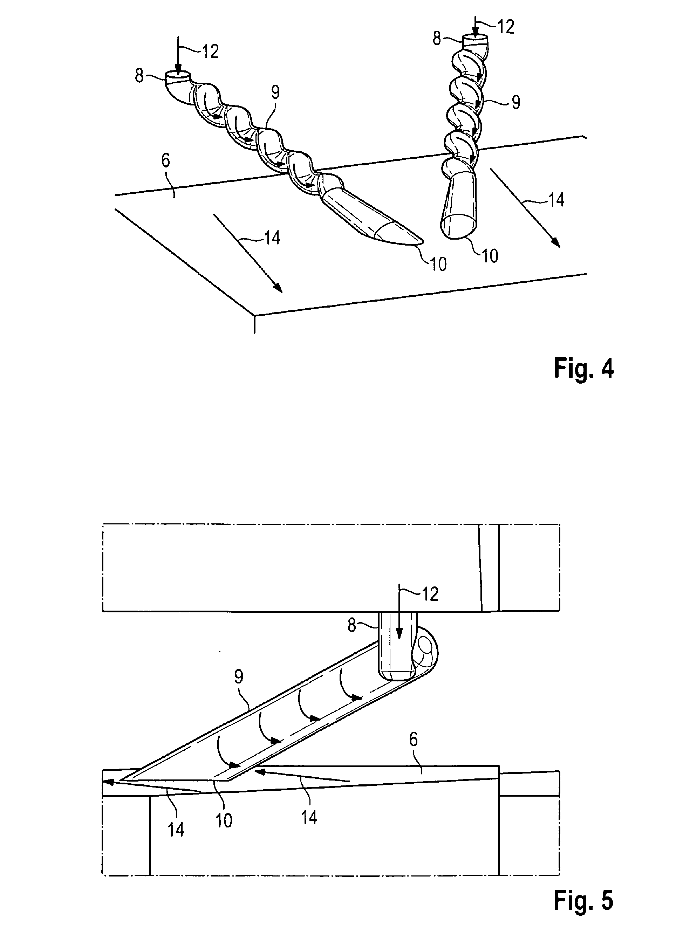

Die Fig. 4 zeigt ein weiteres Ausführungsbeispiel mit gegenläufigen Drall aus zwei gegenläufigen Heli, welche die Kühlkanäle 9 bilden. Bei einem Helix-förmigen Kühlkanal 9 muss der Drall nicht durch eine windschiefe Eintrittsöffnung erzeugt werden, sondern wird durch den Drehsinn der Helix bestimmt. Eine windschiefe Eintrittsöffnung kann aber die Ausbildung einer verdrallten Strömung im Kühlkanal 9 unterstützen. Beide Auslassöffnungen 10 (Ausnehmungen der Brennkammerwand 6) sind mit einem geringen Winkel zur Heißgasströmung ausgerichtet (Ansicht von stromab).

Die Fig. 5 zeigt ein Ausführungsbeispiel mit einem Drall in einer zylindrischen Effusionsöffnung 10 (Ausnehmung der Brennkammerwand 6) mit windschiefer Eintrittsöffnung als engstem Querschnitt (Luftzuführkanal 8). Erfindungsgemäß werden zwei Öffnungen mit gegenläufigem Drall mit einem geringen Winkel zur Heißgasströmung ausgerichtet so kombiniert, dass die Strömung zwischen den Öffnungen in Richtung der zu kühlenden Brennkammerwand 6 strömt. Dies wird erreicht, wenn die Zuführöffnung jeweils auf der Außenseite (also nicht zwischen) den beiden weiterführenden Kühlkanälen 9 angeordnet sind. Die Abbildung 5 zeigt eine Ansicht von stromauf.

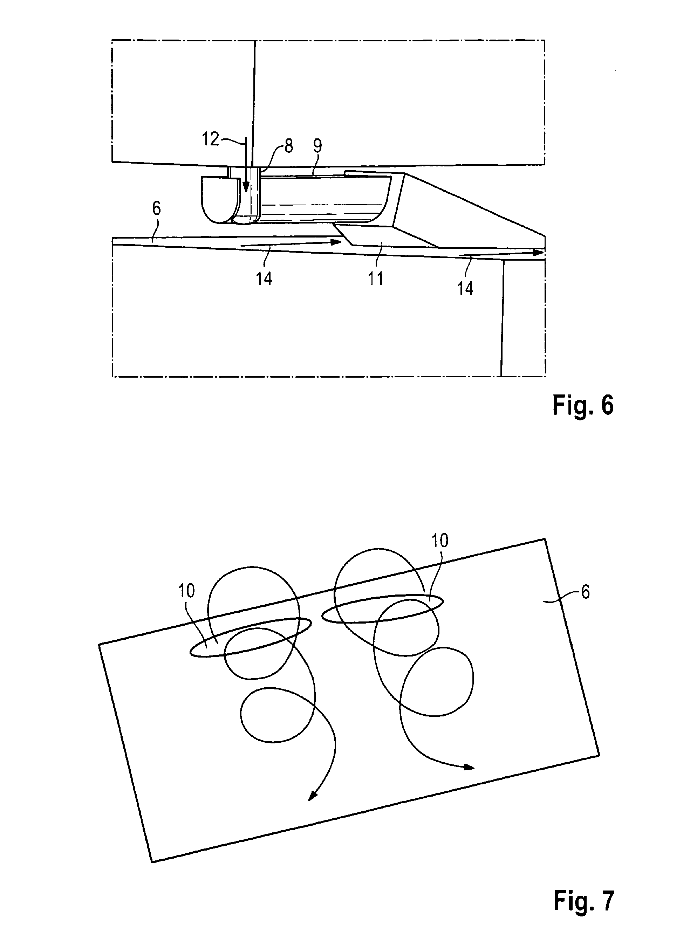

Fig. 6 zeigt ein weiteres Ausführungsbeispiel mit einer Variante mit parallel in der Wand verlaufendem weiterführendem Kühlkanal 9, hierzu windschiefer Eintrittsöffnung als engstem Querschnitt und angestelltem Auslassdiffuser. Erfindungsgemäß werden gemäß Fig. 6 zwei Kühlkanäle 9 mit gegenläufigem Drall mit einem geringen Winkel zur Heißgasströmung ausgerichtet so kombiniert, dass die Strömung zwischen den Öffnungen in Richtung der zu kühlenden Wand 6 strömt. Dies wird erreicht, wenn die Zuführöffnung 10 jeweils auf der Außenseite (also nicht zwischen) den beiden weiterführenden Kühlkanälen 9 angeordnet sind. Der Kühlkanal 9 muss nicht zwingender Weise rund sein. In Fig. 6 ist eine Geometrievariante gezeigt, die ein Fügen der Wand aus zwei Blechen ermöglicht. Hierbei wird zuerst der weiterführende Kühlkanal 9 in der einen Oberfläche eines Bleches hergestellt und nach dem Fügen durch z.B. Hartlöten oder Schweißen wird die windschiefe Eintrittsöffnung (Luftzuführkanal 8) durch z.B. Bohren oder Funkenerodieren durch das zweite Blech eingebracht. Der Auslassdiffuser 11 in die andere Seite des ersten Bleches kann zu einem geeigneten Zeitpunkt in das einzelne Blech oder in das bereits gefügte Laminat aus zwei Blechen eingebracht werden. Die Fig. 6 zeigt eine Ansicht von stromauf.

Die Fig. 7 zeigt das Prinzip der Wechselwirkung zweier benachbarter Öffnungen 10 mit vorteilhafter Ausformung der Dralls: Zwischen den beiden Öffnungen 10 strömt die Luft durch den Drall in Richtung der zu kühlenden Wand 6 und legt sich dadurch auch bei steilerem Austrittswinkel oder höheren Ausblaseraten an die zu kühlende Wand an.

### Bezugszeichenliste:

- 1: Kompressorauslassschaufeln
- 2: Brennkammeraußengehäuse
- 3: Brennkammerinnengehäuse
- 4: Brenner mit Arm und Kopf
- 5: Brennkammerkopf
- 6: Brennkammerwand
- 7: Turbineneinlassschaufeln
- 8: Luftzuführkanal
- 9: Kühlkanal
- 10: Auslass des Kühlkanals (Ausnehmung der Brennkammerwand 6)
- 11: Diffuserförmiger Auslass des Kühlkanals/Auslassdiffuser
- 12: Kühlluftströmung
- 13: Strömungsrichtung durch den Kühlkanal
- 14: Heißgasströmung

## Patentansprüche

1. Gasturbinenbrennkammer mit einer Kühlluftzuführvorrichtung zu einer zu kühlenden Brennkammerwand (6), wobei die Kühlluftzuführung zumindest einen Luftzuführkanal (8) umfasst, welcher mit seiner Strömungsachse im Wesentlichen senkrecht zu der Brennkammerwand (6) angeordnet ist, wobei der Luftzuführkanal (8) mit zumindest einem Kühlkanal (9) strömungsverbunden ist, wobei der Luftzuführkanal (8) eine Drossel bildet und einen geringeren Durchmesser aufweist, als der Kühlkanal (9), wobei der Kühlkanal (9) in einem flachen Winkel, bezogen auf seine Strömungsachse, zur Oberfläche der Brennkammerwand (6) in einer Ausnehmung (10) der Brennkammerwand (6) mündet, wobei der Kühlkanal (9) zur Ausbildung eines Dralls der ihn durchströmenden Luft ausgebildet ist.

2. Gasturbinenbrennkammer nach Anspruch 1, **dadurch gekennzeichnet, dass** benachbart zueinander zwei Kühlkanäle (9) in einem spitzen Winkel zu einander, bezogen auf ihre Strömungsachsen, angeordnet sind.

3. Gasturbinenbrennkammer nach Anspruch 2, **dadurch gekennzeichnet, dass** benachbarte Kühlkanäle (9) zur Ausbildung eines gegenläufigen Dralls der sie durchströmenden Luft ausgebildet sind.

4. Gasturbinenbrennkammer nach einem der Ansprüche 1 bis 3, **dadurch gekennzeichnet, dass** der flache Winkel der Mündung (10) des Kühlkanals (9) zwischen 5° und 45° beträgt, bevorzugt zwischen 10° und 30°, bevorzugt 20°.

5. Gasturbinenbrennkammer nach einem der Ansprüche 2 bis 4, **dadurch gekennzeichnet, dass** der spitze Winkel zwischen benachbarten Kühlkanälen (9) kleiner 45° beträgt.

6. Gasturbinenbrennkammer nach einem der Ansprüche 2 bis 5, **dadurch gekennzeichnet, dass** der Abstand der Ränder der Ausnehmungen (10) der Brennkammerwand (6), durch welche die Kühlkanäle (9) münden, kleiner als vier Durchmesser der Öffnungen (10) oder 2 * (Durchmesser der ersten Öffnung + Durchmesser der zweiten Öffnung) ist.

7. Gasturbinenbrennkammer nach einem der Ansprüche 2 bis 6, **dadurch gekennzeichnet, dass** die Winkelhalbierende im spitzen Winkel zwischen den beiden Kühlkanälen (9) im Wesentlichen in Strömungsrichtung der Strömung von Gasen entlang der zu kühlenden Brennkammerwand (6) angeordnet ist.

8. Gasturbinenbrennkammer nach einem der Ansprüche 2 bis 7, **dadurch gekennzeichnet, dass** die Drallrichtungen der beiden Luftströmungen durch die Kühlkanäle (9) zur Zuleitung der austretenden Kühlluft zur Brennkammerwand (6) ausgebildet sind.

9. Gasturbinenbrennkammer nach einem der Ansprüche 1 bis 8, **dadurch gekennzeichnet, dass** der Drall durch einen Achsversatz der Achsen des Luftzuführkanals (8) und des Kühlkanals ausgebildet wird.

10. Gasturbinenbrennkammer nach einem der Ansprüche 1 bis 8, **dadurch gekennzeichnet, dass** der Drall durch eine Helix-Form des Kühlkanals (9) ausgebildet wird.
